# FASCICULE DE BREVET EUROPEEN

(11) **EP 4 032 784 B1**
(45) Date de publication et mention de la délivrance du brevet: **04.06.2025**
(21) Numéro de dépôt: 22152295.6
(22) Date de dépôt: 19.01.2022
(51) Int. Cl.: B62D 5/04, B62D 6/00, B62D 15/02

(54) **EQUIPEMENT DE CONTRÔLE CAPABLE DE CONTRÔLER UN ANGLE DE BRAQUAGE D'UN VÉHICULE AUTOMOBILE AUTONOME ET VÉHICULE AUTOMOBILE AUTONOME COMPRENANT UN TEL ÉQUIPEMENT**
STEUERGERÄT, DAS EINEN LENKWINKEL EINES AUTONOMEN KRAFTFAHRZEUGS STEUERN KANN, UND AUTONOMES KRAFTFAHRZEUG MIT EINEM SOLCHEN GERÄT
CONTROL DEVICE CAPABLE OF CONTROLLING AN ANGLE OF LOCKING OF AN AUTONOMOUS MOTOR VEHICLE AND AUTONOMOUS MOTOR VEHICLE COMPRISING SUCH A DEVICE

(30) Priorité: 22.01.2021 FR 2100611
(43) Date de publication de la demande: 27.07.2022
(73) Titulaire: MAGNA STEYR Fahrzeugtechnik GmbH & Co KG, 8041 Graz (AT)
(72) Inventeur: MIRANDA, Paulo, 78960 VOISINS LE BRETONNEUX (FR); DESMOINEAUX, Nicolas, 92400 COURBEVOIE (FR); VALLOT, Laurent, 28000 CHARTRES (FR); GAGET, Aurélien, 92290 CHATENAY MALABRY (FR); CHOQUET, Laurianne, 92500 RUEIL MALMAISON (FR)
(74) Mandataire: Zangger, Bernd

(56) Documents cités:
- EP-A1- 3 587 219
- EP-A2- 1 616 746

## Description

La présente invention concerne un équipement de contrôle capable de contrôler un angle de braquage d'un véhicule automobile autonome.

La présente invention concerne également un véhicule automobile autonome embarquant un tel équipement de contrôle.

L'invention concerne le domaine du pilotage automatique de véhicules automobiles, en particulier de la sécurité du pilotage de tels véhicules.

Pour pouvoir circuler en autonomie totale alors qu'il embarque des passagers, un véhicule automobile autonome doit satisfaire à des contraintes de sécurité drastiques. En particulier, le véhicule doit être capable de détecter une défaillance de fonctionnement, afin de pouvoir mettre le véhicule en sécurité.

Les contraintes de sécurité sont telles qu'il n'est généralement pas possible d'utiliser des capteurs et actionneurs du type « produits vendus sur étagère », ou produit COTS (de l'anglais « commercial off-the-shelf »). En effet, de tels produits COTS, bien que facile à se procurer et peu onéreux, ne permettent généralement pas de satisfaire le niveau de sécurité requis. De plus, il s'agit de produits propriétaires qu'il n'est donc pas aisé de monitorer.

Ainsi, jusqu'à présent, pour atteindre le niveau de sécurité requis, le développement d'un véhicule automobile autonome implique le développement de capteurs et actionneurs spécifiques permettant une surveillance de leur bon fonctionnement. Cela reste complexe et coûteux.

De plus, tout changement apporté au véhicule, par exemple sa taille, sa charge utile maximale, etc., est susceptible d'imposer des modifications aux capteurs et actionneurs, qu'il faut alors redévelopper entièrement afin de continuer à satisfaire aux exigences de sécurité. EP 1 616 746 A2 révèle les caractéristiques du préambule de la revendication 1.

Un but de la présente invention est de répondre à ce problème, notamment en proposant un équipement de contrôle construit autour de composants COTS tout en respectant les niveaux de sécurité requis.

A cet effet, l'invention a pour objet un équipement de contrôle selon la revendication 1.

Notamment, le contrôleur primaire est configuré pour transmettre la consigne de braquage à l'actionneur auxiliaire soit lorsque la première valeur est supérieure à un premier seuil d'erreur, soit lorsque la deuxième valeur est supérieure à un second seuil d'erreur.

Suivant d'autres aspects avantageux de l'invention, l'équipement de contrôle est selon l'une quelconque des revendications 2 à 10.

L'invention a également pour objet un véhicule automobile autonome selon la revendication 11.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'un véhicule automobile autonome comprenant un équipement de contrôle selon un mode de réalisation préféré de l'invention ;
[Fig 2] la figure 2 est une représentation schématique de courbes montrant des exemples de seuils d'angles de braquage en fonction de la vitesse du véhicule de la figure 1 ; et,
[Fig 3] la figure 3 est une représentation schématique de courbes montrant des exemples de seuils de vitesses d'angle de braquage en fonction de la vitesse du véhicule de la figure 1.

### SYSTEME

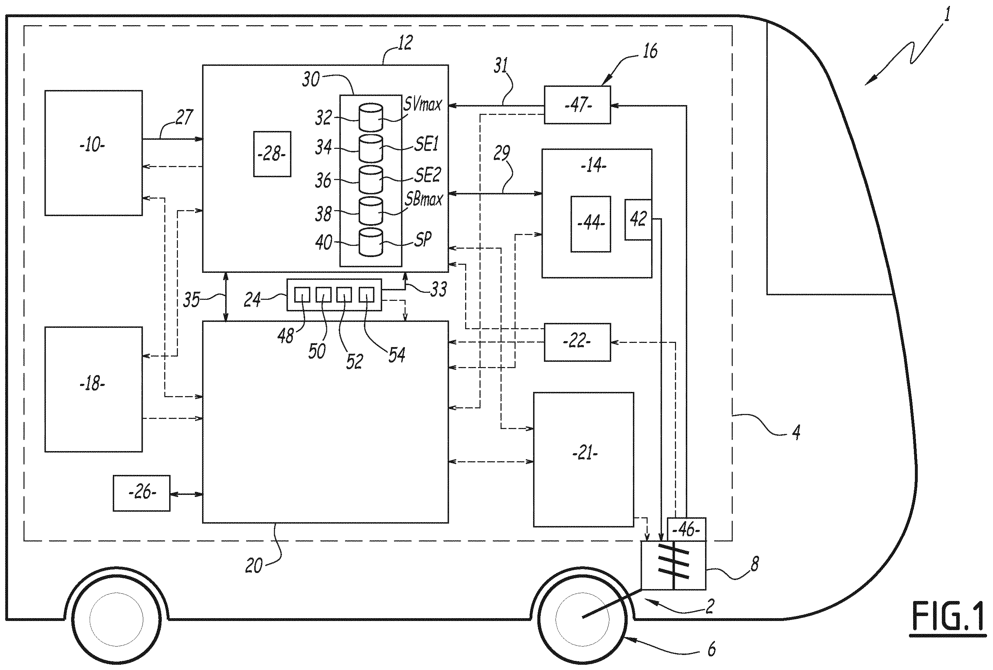

Sur la figure 1, un véhicule automobile autonome 1 comprend une mécanique de direction 2 et un équipement de contrôle 4 relié à la mécanique de direction 2.

La mécanique de direction 2 comprend par exemple au moins une roue directrice 6 et un ou plusieurs axes de direction 8 pour modifier un angle de braquage de la roue 6. L'angle de braquage est défini par rapport à une direction longitudinale du véhicule 1 orientée de l'arrière vers l'avant. Lorsque l'angle de braquage présente un signe négatif, le véhicule 1 tourne à gauche quand il avance, et lorsque l'angle de braquage présente un signe positif, le véhicule 1 tourne à droite quand il avance.

L'équipement de contrôle 4 est capable de modifier l'angle de braquage.

L'équipement de contrôle 4 comprend un système primaire de pilotage automatique 10, configuré pour générer une commande de braquage, un contrôleur primaire 12, configuré pour déterminer une consigne de braquage à partir de la commande de braquage, un actionneur primaire 14, configuré pour conférer un angle de braquage à la roue 6 en fonction de la consigne de braquage, et un capteur externe primaire 16, de mesure de l'angle de braquage instantané de la roue 6.

Le système 10 génère une commande de braquage à partir d'une trajectoire que doit suivre le véhicule 1.

La consigne de braquage donne l'instruction à l'actionneur de modifier l'angle de braquage de la roue 6.

L'équipement de contrôle 4 comprend, en outre et de préférence pour des raisons de sécurité, un système auxiliaire de pilotage automatique 18, un contrôleur auxiliaire 20, un actionneur auxiliaire 21 et un capteur externe auxiliaire 22.

Le système auxiliaire de pilotage automatique 18 est en redondance du système primaire de pilotage automatique 10, le contrôleur auxiliaire 20 est en redondance du contrôleur primaire 12, l'actionneur auxiliaire 21 est en redondance de l'actionneur primaire 14, et le capteur externe auxiliaire 22 est en redondance du capteur externe primaire 16.

Le fonctionnement de chaque dispositif auxiliaire est identique ou similaire au dispositif primaire qu'il redonde. Pour des raisons de clarté, sur la figure 1 la structure interne du contrôleur auxiliaire 20 et de l'actionneur auxiliaire 21 n'est pas représentée en détails puisqu'ils sont identiques respectivement au contrôleur primaire 12 et à l'actionneur primaire 14.

En fonctionnement nominal de l'équipement de contrôle 4, dit état nominal, l'équipement de contrôle 4 est pleinement opérationnel et ne connaît aucune défaillance.

Lors de la détection d'une défaillance affectant un dispositif particulier de l'équipement de contrôle 4, ce dernier passe dans un fonctionnement auxiliaire, dit état auxiliaire. Dans cet état auxiliaire, le dispositif redondant qui est associé au dispositif particulier défaillant vient se substituer à ce dispositif défaillant, tandis que les autres dispositifs, considérés comme non-défaillants, restent actifs et ne sont pas substitués par les dispositifs redondants associés. L'état auxiliaire conduit par exemple l'arrêt du véhicule 1.

De plus, l'équipement de contrôle 4 comprend, de préférence, au moins un dispositif de pilotage manuel 24 configuré pour générer une commande de braquage manuelle et pour transmettre la commande de braquage manuelle au contrôleur primaire 12. Un tel dispositif de pilotage manuel 24 permet à un opérateur soit de conduire le véhicule (phase de pilotage manuel), soit de reprendre la main sur le pilotage du véhicule en cas d'identification par l'opérateur d'un problème (phase de test du véhicule).

L'équipement de contrôle 4 comprend, de préférence, un capteur de courant 26 configuré pour mesurer une alimentation électrique de l'actionneur auxiliaire 21 et pour transmettre un signal de mesure correspondant au contrôleur primaire 12 (et/ou au contrôleur auxiliaire 20).

Sur la figure 1, des exemples d'échanges de signaux et de données entres les dispositifs constitutifs de l'équipement de contrôle 4 sont représentés en lignes pleines dans l'état nominal et en lignes interrompues dans l'état auxiliaire.

Le système primaire de pilotage automatique 10 est par exemple un calculateur comprenant une mémoire et un processeur. Il est par exemple programmé pour calculer une trajectoire que doit suivre le véhicule 1 et pour générer, à chaque instant, une commande de braquage adaptée.

Le système 10 est connecté, via une liaison de données dédiée 27, au contrôleur primaire 12 (et/ou au contrôleur auxiliaire 20) pour une transmission de la commande de braquage au contrôleur primaire 12 (et/ou au contrôleur auxiliaire 20).

Le contrôleur primaire 12 est connecté, via une liaison de données 29, telle qu'un bus de données, à l'actionneur primaire 14 pour transmettre à l'actionneur primaire 14 la consigne de braquage, mais également pour recevoir depuis l'actionneur primaire 14 un signal de mesure interne, qui correspondant à une mesure de l'angle de braquage conféré par l'actionneur primaire 14.

Le contrôleur 12 est connecté, via une liaison de données 31, telle qu'un bus de données, au capteur externe primaire 16 pour recevoir un signal de mesure externe correspondant à une mesure de l'angle de braquage de la roue directrice 6.

Le contrôleur 12 est en outre connecté, via un câble électrique 33, au dispositif de pilotage manuel 24 pour recevoir le signal électrique correspondant à une commande de braquage manuelle.

En complément, le contrôleur 12 est connecté, pour des raisons de redondance, au système auxiliaire de pilotage automatique 18, à l'actionneur auxiliaire 21 et au capteur externe auxiliaire 22 via des liaisons similaires à celles présentées ci-dessus.

En outre, le contrôleur principal 12 est par exemple connecté au capteur de courant 26 pour recevoir un signal de mesure indicatif de l'alimentation en courant électrique de l'actionneur auxiliaire 21. Lorsque le contrôleur principal 12 reçoit le signal de mesure alors qu'il considère l'actionneur primaire 14 comme actif, il est propre à interrompre l'alimentation de l'actionneur auxiliaire 21. Cela permet d'arrêter le fonctionnement de l'actionneur auxiliaire 21, qui est considéré comme défaillant, puisqu'il ne doit pas être alimenté alors que c'est l'actionneur primaire 14 qui est utilisé. De préférence, le contrôleur principal 12 effectue en outre une mise en sécurité du véhicule 1, telle qu'un freinage d'urgence, lors de la réception du signal de mesure du capteur 26 pendant le fonctionnement de l'actionneur primaire 14.

Le contrôleur 12 est par exemple connecté au contrôleur auxiliaire 20 par une liaison de données 35. Le contrôleur est configuré pour recevoir du contrôleur 20 un signal dit « en vie » indiquant l'état de fonctionnement nominal du contrôleur 20, et pour transmettre un signal « en vie » au contrôleur 20 pour indiquer son propre fonctionnement nominal.

De préférence, le contrôleur 12 est raccordé à une source d'alimentation électrique (non représentée) sur la figure 1, distincte d'une source d'alimentation électrique, non représentée, du contrôleur auxiliaire 20, de manière à éviter des modes communs de défaillance associés à l'alimentation en puissance électrique.

Le contrôleur primaire 12 comprend par exemple un processeur 28 et une mémoire 30, ayant plusieurs volumes de stockage de données, par exemple un premier, deuxième, troisième, quatrième et cinquième volumes 32, 34, 36, 38, 40.

Le premier volume 32 comprend des valeurs d'un seuil de consigne SVmax en fonction de la vitesse instantanée V du véhicule 1. Le seuil SVmax donne, pour une vitesse donnée, des valeurs maximales autorisées de la consigne de braquage adressée à l'actionneur 14 ou à l'actionneur 21.

Par « valeur maximale autorisée », il est entendu la valeur maximale dans l'état nominal de l'équipement de contrôle 4. Lors d'un dépassement de la valeur maximale autorisée, le contrôleur primaire 12, ou le cas échéant le contrôleur auxiliaire 20, constate la survenue d'une défaillance d'une partie de l'équipement de contrôle 4 et bascule dans l'état auxiliaire.

Par vitesse instantanée V est la vitesse du véhicule selon sa direction longitudinale. Elle est par exemple mesurée par un capteur de vitesse (non représenté) et transmise au contrôleur primaire 12 et/ou au contrôleur auxiliaire 20.

Le deuxième volume 34 comprend des valeurs d'un premier seuil d'erreur SE1. Le premier seuil d'erreur SE1 est une valeur maximale autorisée de la différence entre l'angle de braquage de la consigne de braquage et l'angle de braquage du signal de mesure interne.

Le troisième volume 36 comprend des valeurs d'un second seuil d'erreur SE2. Le second seuil d'erreur SE2 est une valeur maximale autorisée de la différence entre l'angle de braquage du signal de mesure interne et l'angle de braquage du signal de mesure externe.

Le premier seuil d'erreur SE1 et/ou le second seuil d'erreur SE2 dépend de préférence de la vitesse V. En variante, le premier seuil d'erreur SE1 et/ou le second seuil d'erreur SE2 est indépendant de la vitesse V.

Le quatrième volume 38 comprend des valeurs d'un seuil de braquage maximal SBmax. Ce seuil est la valeur maximale autorisée de l'angle du signal de mesure interne et/ou du signal de mesure externe. Le seuil de braquage maximal SBmax dépend de préférence de la vitesse V.

Le cinquième volume 40 comprend des valeurs d'un seuil de pilotage automatique SP. Ce seuil est une valeur maximale autorisée de la commande de braquage reçue du système de pilotage automatique primaire ou auxiliaire. Il dépend de préférence de la vitesse V.

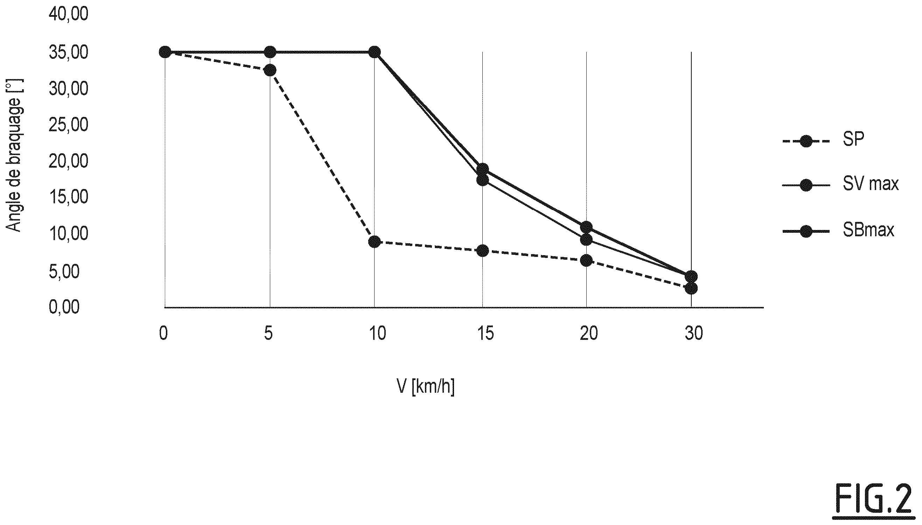

Des exemples de valeurs du seuil de pilotage automatique SP, du seuil de consigne SVmax et du seuil de braquage maximal SBmax sont montrées sur la figure 2.

L'actionneur primaire 14 est un actionneur à commande électrique. Il est par exemple agencé dans un boîtier pour protéger ses composants de salissures ou d'humidité. L'actionneur primaire 14 intègre un moteur 42 capable d'exercer un couple mécanique sur l'axe 8 de nature à modifier l'angle de braquage de la roue 6.

L'actionneur primaire 14 comprend en outre un capteur interne 44 propre à générer le signal de mesure interne, qui correspondant à une mesure de l'angle de braquage conféré par l'actionneur primaire 14.

L'actionneur primaire 14 est par exemple un produit vendu sur étagère COTS. De ce fait, il n'est pas suffisamment fiable pour répondre aux besoins d'un véhicule autonome. S'il est capable d'auto-diagnostiquer une défaillance, on se doit d'avoir une confiance limitée dans ce diagnostic. C'est la raison pour laquelle est prévu d'une part un capteur externe 16 indépendant de l'actionneur 14 permettant une autre mesure de l'angle de braquage à des fins de diagnostic du bon fonctionnement de l'actionneur 14 et d'autre part un contrôleur primaire 12 configuré pour réaliser ce diagnostic et détecter la survenue d'une défaillance de l'actionneur primaire 14. Par ailleurs, de manière avantageuse, le contrôleur primaire 12 est configuré pour limiter les valeurs d'angle de braquage et de variation d'angle de braquage à l'intérieur de plages prédéterminées, afin de ne pas propager vers l'actionneur des commandes qui seraient erronées ou aberrantes.

Le capteur externe primaire 16 mesure l'angle de braquage et transmet le signal de mesure externe au contrôleur primaire 12 via la liaison de données 31.

Par exemple, le capteur externe primaire 16, qui peut également être un produit COTS, comprend un senseur 46 fixée sur l'un des axes 8 du système de transmission de direction 2 et un moyen électronique d'acquisition 47 du signal délivré par le senseur 46.

Le dispositif de pilotage manuel 24 comprend par exemple une manette 48, un ensemble volant 50/pédale 52, et/ou un bouton de sécurité 54.

La manette 48 et/ou l'ensemble volant 50/pédale 52 permettent à un opérateur de piloter et imposer la commande de braquage manuelle.

La pédale 52 permet à l'opérateur d'imposer un freinage ou une accélération du véhicule 1.

Le bouton de sécurité 54 permet à l'opérateur d'imposer un arrêt du véhicule 1.

### PROCEDE

Un mode de réalisation du fonctionnement du contrôleur primaire 12 va maintenant être décrit. Le fonctionnement du contrôleur auxiliaire 20 est identique lorsqu'il se substitue au contrôleur primaire.

Le contrôleur primaire 12 fonctionne selon un mode autonome ou selon un mode manuel.

Dans le mode autonome, le contrôleur primaire 12 détermine la consigne de braquage en fonction de la commande de braquage. Par exemple, le contrôleur 12 limite la consigne de braquage au seuil de consigne SVmax : lorsque la valeur de la commande de braquage est inférieure ou égale au seuil SVmax, la consigne est égale à la commande de braquage ; Sinon, la consigne de braquage est égale au seuil SVmax.

Dans le mode manuel, le contrôleur primaire 12 reçoit la commande de braquage manuelle et détermine la consigne de braquage en fonction de cette commande manuelle. Par exemple, le contrôleur primaire 12 limite la consigne de braquage au seuil SVmax.

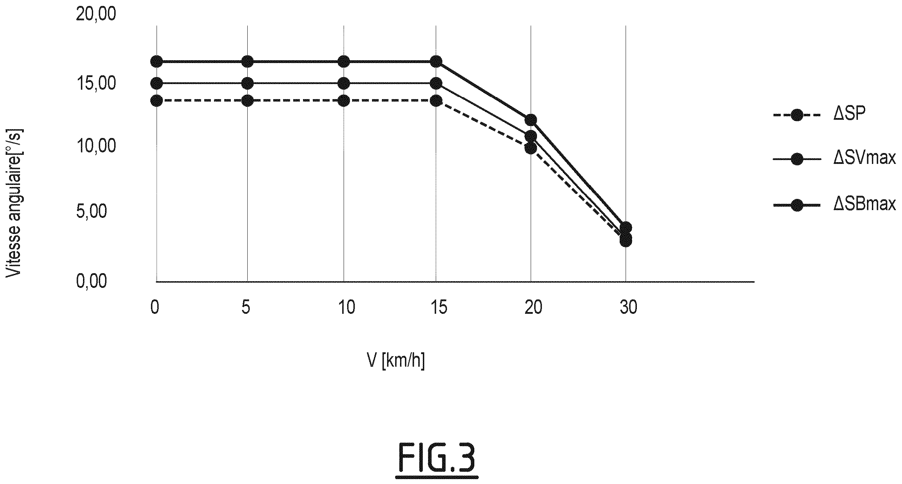

En complément, le contrôleur primaire 12 limite la variation de la consigne de braquage, afin de limiter des accélérations latérales du véhicule 1. Par exemple, le contrôleur primaire 12 compare la différence entre des valeurs de la consigne de braquage entre deux instants temporels successifs avec un seuil de variation prédéterminé ΔSVmax, par exemple enregistré dans un volume spécifique de la mémoire. Le contrôleur primaire 12 limite alors la variation de la consigne de braquage à une valeur inférieure ou égale au seuil de variation. Un exemple du seuil de variation ΔSVmax en fonction de la vitesse instantanée V du véhicule 1 est représenté sur la figure 3.

Quel que soit le mode de fonctionnement dans lequel il se trouve, le contrôleur primaire 12 peut être soit dans un état nominal soit dans un état auxiliaire de repli. Dans ce qui suit, des exemples de reconfiguration de l'équipement de contrôle 4 lors d'un basculement dans un état auxiliaire sont décrits.

### DETECTION DEFAILLANCE DE L'ACTIONNEUR PRIMAIRE 14 EN FONCTION DE LA CONSIGNE DE BRAQUAGE

Pour diagnostiquer une défaillance de l'actionneur 14, le contrôleur 12 détermine périodiquement une première valeur correspondant à la différence entre la consigne de braquage et le signal de mesure interne réalisée par le capteur interne 44.

Par exemple, le contrôleur 12 interroge le volume 34 pour connaître, compte tenu de la vitesse instantanée V, la valeur du premier seuil d'erreur SE1. Le contrôleur 12 compare ensuite la première valeur avec la valeur du premier seuil d'erreur SE1. Lorsque la première valeur est supérieure à SE1, une défaillance de l'actionneur 14 est détectée. Il peut par exemple s'agir d'une défaillance du moteur de l'actionnement 42 ou du capteur interne 44. Dans ce cas, le contrôleur 12 transmet la consigne de braquage à l'actionneur auxiliaire 21 au lieu de l'actionneur primaire 14, de sorte que c'est l'actionneur auxiliaire 21 qui va dorénavant conférer l'angle de braquage à la roue directrice 6.

### DETECTION DEFAILLANCE DU CAPTEUR EXTERNE PRIMAIRE 16 OU DU CAPTEUR INTERNE 44

Toujours pour diagnostiquer une défaillance de l'actionneur 14, le contrôleur 12 détermine une deuxième valeur correspondant à la différence entre le signal de mesure interne réalisée par le capteur interne 44 et le signal de mesure externe réalisée par le capteur externe 16.

Par exemple, le contrôleur 12 interroge le troisième volume 36 pour connaître, compte tenu de la vitesse instantanée V, la valeur courante du second seuil d'erreur SE2. Il compare ensuite la deuxième valeur avec la valeur du le second seuil d'erreur SE2. Lorsque la deuxième valeur est supérieure à SE2, le contrôleur 12 considère qu'une défaillance affecte le capteur interne 44 ou le capteur externe primaire 16, et il décide de transmettre la consigne de braquage à l'actionneur auxiliaire 21 pour actionner la roue directrice 6, au lieu de l'actionneur primaire 14.

### DETECTION DEFAILLANCE DE L'ACTIONNEUR PRIMAIRE 14 EN FONCTION DU SIGNAL DE MESURE EXTERNE ET/OU INTERNE

Le contrôleur primaire 12 déclenche une alerte lorsque le signal de mesure interne et/ou le signal de mesure externe correspond à une mesure aberrante de l'angle de braquage.

Par exemple, le contrôleur 12 interroge le quatrième volume 38 pour connaître, compte tenu de la vitesse instantanée V, la valeur courante du seuil SBmax. Il compare le signal de mesure interne et/ou le signal de mesure externe avec le seuil SBmax. Lorsque le signal de mesure interne et/ou le signal de mesure externe est supérieur à SBmax, le contrôleur 12, considérant une défaillance de l'actionneur principal 14 et/ou du capteur externe 16, transmet la consigne de braquage à l'actionneur auxiliaire 21 pour actionner la roue directrice au lieu de l'actionneur primaire 14.

En complément, le contrôleur primaire 12 compare la différence des valeurs du signal de mesure interne et/ou du signal de mesure externe entre deux instants temporels successifs avec un seuil de variation prédéterminé ΔSBmax, par exemple enregistré dans un volume spécifique de la mémoire. Lorsque la variation du signal de mesure interne et/ou du signal de mesure externe est supérieure au seuil ΔSBmax, le contrôleur 12, considérant une défaillance de l'actionneur principal 14 et/ou du capteur externe 16, transmet la consigne de braquage à l'actionneur auxiliaire 21 au lieu de l'actionneur primaire 14 pour actionner la roue directrice 6.

Un exemple du seuil ΔSBmax en fonction de la vitesse instantanée V du véhicule 1 est représenté sur la figure 3.

### DETECTION DEFAILLANCE DU CONTROLEUR PRIMAIRE

Pour diagnostiquer une défaillance du contrôleur primaire 12, le contrôleur auxiliaire 20 surveille la valeur de la consigne de braquage déterminée par le contrôleur primaire 12 et, en cas de défaillance de ce dernier, décide de se substituer au contrôleur primaire 12 en générant la consigne de braquage et en la transmettant à l'actionneur.

Par exemple, le contrôleur auxiliaire 20 compare périodiquement la consigne de braquage en sortie du contrôleur primaire 12 avec le seuil de consigne SVmax stocké dans son premier volume 32. Si la consigne de braquage est supérieure à SVmax, le contrôleur auxiliaire 20 considère que le contrôleur primaire 12 est défaillant. Le contrôleur auxiliaire 20 transmet la consigne auxiliaire à l'actionneur primaire 14 ou à l'actionneur auxiliaire 21 en remplacement de la consigne de braquage.

### DETECTION DEFAILLANCE DU CONTROLEUR PRIMAIRE PAR LE CONTROLEUR AUXILIAIRE OU INVERSEMENT

En l'absence de la réception par le contrôleur 12 du signal « en vie » de la part du contrôleur 20, le contrôleur 12 considère que le contrôleur 20 ne fonctionne plus et que la redondance de contrôleur est perdue. Le contrôleur 12 passe alors dans l'état auxiliaire et arrête par exemple le véhicule 1.

En l'absence de la réception du signal « en vie » de la part du contrôleur 12, le contrôleur 20 considère que celui-ci ne fonctionne plus et prend le relais du contrôleur 12.

### DETECTION DEFAILLANCE DU SYSTEME PRIMAIRE DE PILOTAGE AUTOMATIQUE 10

Pour diagnostiquer une défaillance du système de pilotage automatique, le contrôleur 12 surveille la valeur de la commande de braquage, et en cas de détection d'une défaillance demande au système auxiliaire de pilotage automatique 18 de se substituer au système primaire 10.

Pour ce faire, le contrôleur 12 interroge le cinquième volume 40 pour connaître le seuil de pilotage automatique SP. Il compare la commande de braquage avec le seuil SP. Lorsque la commande de braquage est supérieure à SP, le contrôleur 12 considère le système 10 comme défaillant et demande au système auxiliaire de pilotage automatique 18 de prendre la main sur le pilotage du véhicule 1, notamment en déterminant une commande de braquage auxiliaire qui sera prise en compte à la place de la commande de braquage, pour la détermination de la consigne de braquage.

En complément, le contrôleur primaire 12 compare la différence entre des valeurs seuil de pilotage automatique SP entre deux instants temporels successifs avec un seuil de variation prédéterminé ΔSP, par exemple enregistré dans un volume spécifique de la mémoire. Lorsque la variation est supérieure au seuil ΔSP, le contrôleur 12 considère le système 10 comme défaillant et demande au système auxiliaire de pilotage automatique 18 de prendre la main sur le pilotage du véhicule 1.

Un exemple du seuil ΔSP en fonction de la vitesse instantanée V du véhicule 1 est représenté sur la figure 3.

La figure 2 est un exemple de graphe de la valeur du seuil de pilotage automatique SP, du seuil de consigne SVmax et du seuil de braquage maximal SBmax (exprimée en degrés) en fonction de la valeur de la vitesse instantanée V du véhicule (exprimée en km/h).

Le seuil SP est ainsi, pour toute valeur de la vitesse instantanée V, inférieur ou égal au seuil SBmax, et de préférence strictement inférieur à ce seuil.

Le seuil SP est, pour toute vitesse instantanée V, inférieur ou égal au seuil SVmax, de préférence strictement inférieur à ce seuil.

Le seuil SVmax est, pour toute vitesse instantanée V, inférieur ou égal au seuil de braquage maximal SBmax, de préférence strictement inférieur à ce seuil.

La figure 3 est un graphe de la variation temporelle de l'angle de braquage de la roue directrice 6 du véhicule 1 en fonction de la vitesse instantanée V du véhicule 1. La variation temporelle de l'angle de braquage ou vitesse angulaire de la roue directrice 6 autour d'un axe vertical du véhicule 1 est exprimée en degrés par seconde. L'axe verticale s'étend selon une direction d'élévation du véhicule lorsqu'il est positionné sur une route horizontale.

Trois courbes sont représentées sur la figure 3 correspondant à des variations temporelles maximales : une courbe ΔSP dite du seuil de variation de pilotage automatique, une courbe ΔSVmax dite du seuil de variation de consigne et courbe ΔSBmax dite du seuil de variation de braquage maximal.

Ces trois courbes représentent une limite de la vitesse angulaire à ne pas dépasser. Le seuil ΔSP représente la vitesse angulaire maximale autorisée résultant de la commande de braquage, le seuil ΔSVmax représente la vitesse angulaire maximale autorisée résultant de la consigne de braquage, et le seuil ΔSBmax représente la vitesse angulaire maximale autorisée résultant de la valeur du signal de mesure interne et/ou du signal de mesure externe.

La valeur du seuil ΔSVmax est par exemple inférieure, pour chaque vitesse instantanée V du véhicule 1, à la valeur du seuil ΔSBmax pour cette vitesse.

La valeur du seuil ΔSP est par exemple inférieure, pour chaque vitesse instantanée V du véhicule 1, à la valeur du seuil ΔSBmax et du seuil ΔSVmax pour cette vitesse.

On conçoit que l'équipement de contrôle 4 selon l'invention et le véhicule autonome 1 comprenant l'équipement de contrôle 4 présentent un grand nombre d'avantages.

En particulier, l'équipement de contrôle 4 est simple et confère une sécurité de fonctionnement élevée au véhicule automobile autonome 1. Les comparaisons, à chaque instant, de la consigne de braquage, de la mesure interne et de la mesure externe constituent un moyen robuste de détecter tout type de défaillance pouvant affecter l'actionneur primaire et/ou l'actionneur auxiliaire.

Des composants COTS peuvent donc être utilisés tout en garantissant au véhicule le niveau de sécurité requis pour un transport de passagers en autonomie complète.

La sécurité de fonctionnement de l'équipement de contrôle 4 (et par conséquent du véhicule) est augmentée par le contrôleur auxiliaire 20 et le système auxiliaire de pilotage automatique 18, qui reprennent la main en cas de défaillance du contrôleur primaire 12 ou du système primaire de pilotage automatique 10.

## Revendications

1. Equipement de contrôle (4) capable de contrôler un angle de braquage d'un véhicule automobile autonome (1), le véhicule comportant au moins une roue directrice (6), l'équipement de contrôle (4) comprenant :
- un contrôleur primaire (12), configuré pour déterminer une consigne de braquage ;
- un actionneur primaire (14), configuré pour conférer un angle de braquage à la roue directrice (6) du véhicule (1) en fonction de la consigne de braquage lorsque ledit actionneur primaire (14) reçoit ladite consigne de braquage, l'actionneur primaire (14) comprenant un capteur interne (44) configuré pour transmettre, au contrôleur primaire (12), un signal de mesure interne correspondant à une mesure de l'angle de braquage conféré par l'actionneur primaire (14) ;
- un capteur externe (16) configuré pour transmettre, au contrôleur primaire (12), un signal de mesure externe correspondant à une mesure de l'angle de braquage de la roue directrice (6) ;
- un actionneur auxiliaire (21), configuré pour conférer un angle de braquage à la roue directrice (6) du véhicule lorsque ledit actionneur auxiliaire (21) reçoit ladite consigne de braquage ; **caractérisé en ce que** :
le contrôleur primaire (12) est configuré pour déterminer une première valeur correspondant à la différence entre la consigne de braquage et le signal de mesure interne, et est configuré pour déterminer une deuxième valeur correspondant à la différence entre le signal de mesure interne et le signal de mesure externe,
le contrôleur primaire (12) est configuré pour transmettre la consigne de braquage à l'actionneur auxiliaire (21) lorsque la première valeur est supérieure à un premier seuil d'erreur (SE1) et/ou lorsque la deuxième valeur est supérieure à un second seuil d'erreur (SE2),
le contrôleur primaire (12) est configuré pour transmettre la consigne de braquage à l'actionneur auxiliaire (21) lorsque le signal de mesure interne et/ou le signal de mesure externe correspond à une mesure de l'angle de braquage qui est supérieure à un seuil de braquage maximal (SBmax), le seuil de braquage maximal (SBmax) dépendant de la vitesse instantanée du véhicule.

2. Equipement de contrôle (4) selon la revendication 1, comprenant en outre un contrôleur auxiliaire (20), configuré pour déterminer une consigne auxiliaire de braquage lorsque la consigne de braquage déterminée par le contrôleur primaire (12) est supérieure à un seuil de consigne (SVmax), le seuil de consigne (SVmax) dépendant de la vitesse instantanée du véhicule,
l'actionneur primaire (14) ou l'actionneur auxiliaire (21) étant configuré pour conférer un angle de braquage à la roue directrice (6) du véhicule en fonction de la consigne auxiliaire de braquage au lieu de la consigne de braquage.

3. Equipement de contrôle (4) selon la revendication 2, dans lequel le seuil de consigne (SVmax) est, pour chaque vitesse instantanée du véhicule, inférieur ou égal au seuil de braquage maximal (SBmax) pour cette vitesse instantanée.

4. Equipement de contrôle (4) selon la revendication 2 ou la revendication 3, dans lequel le contrôleur primaire (12) est configuré pour être raccordé à une source d'alimentation électrique distincte d'une source d'alimentation électrique du contrôleur auxiliaire (20) pour éviter des modes communs de défaillance.

5. Equipement de contrôle (4) selon l'une quelconque des revendications 2 à 4, comprenant, en outre, un capteur de courant (26), configuré pour détecter une alimentation électrique de l'actionneur auxiliaire (21) et pour transmettre un signal de détection au contrôleur primaire (12).

6. Equipement de contrôle (4) selon l'une quelconque des revendications précédentes, comprenant, en outre, un système primaire de pilotage automatique (10) configuré pour générer une commande de braquage en fonction d'une trajectoire affectée au véhicule, et pour transmettre la commande de braquage au contrôleur primaire (12), respectivement au contrôleur auxiliaire (20), le contrôleur primaire (12), respectivement le contrôleur auxiliaire (20), déterminant la consigne de braquage à partir de la commande de braquage.

7. Equipement de contrôle (4) selon la revendication 6, comprenant, en outre, un système auxiliaire de pilotage automatique (18), configuré pour déterminer une commande de braquage auxiliaire et pour transmettre la commande de braquage auxiliaire au contrôleur primaire (12), respectivement au contrôleur auxiliaire (20), le contrôleur primaire (12), respectivement au contrôleur auxiliaire (20), déterminant la consigne de braquage à partir de la commande de braquage auxiliaire.

8. Equipement de contrôle (4) selon la revendication 7, dans lequel le contrôleur primaire (12) est propre à prendre en compte la commande de braquage auxiliaire à la place de la commande de braquage, lorsque la commande de braquage est supérieure à un seuil de pilotage automatique (SP), le seuil de pilotage automatique (SP) dépendant de la vitesse instantanée du véhicule.

9. Equipement de contrôle (4) selon la revendication 8 en combinaison avec la revendication 3, dans lequel le seuil de pilotage automatique (SP) est, pour chaque vitesse instantanée du véhicule, inférieur ou égal au seuil de braquage maximal (SBmax) et/ou au seuil de consigne (SVmax) pour cette vitesse.

10. Equipement de contrôle (4) selon l'une quelconque des revendications précédentes, comprenant en outre au moins un dispositif de pilotage manuel (24) configuré pour générer une commande de braquage manuelle, le contrôleur primaire (12) étant configuré pour déterminer la consigne de braquage en fonction de la commande de braquage manuelle.

11. Véhicule automobile autonome (1) comprenant au moins une roue directrice (6), **caractérisé en ce qu'**il comporte un équipement de contrôle (4) relié à la route directrice (6), l'équipement de contrôle (4) étant conforme à l'une quelconque des revendications précédentes.

## Patentansprüche

1. Steuergerät (4), das dazu fähig ist, einen Lenkwinkel eines autonomen Kraftfahrzeugs (1) zu steuern, wobei das Fahrzeug mindestens ein gelenktes Rad (6) umfasst, wobei das Steuergerät (4) Folgendes beinhaltet:
- eine Hauptsteuerung (12), die dazu konfiguriert ist, einen Lenksollwert zu bestimmen;
- einen Hauptaktor (14), der dazu konfiguriert ist, dem gelenkten Rad (6) des Fahrzeugs (1) einen Lenkwinkel in Abhängigkeit von dem Lenksollwert zu verleihen, wenn der Hauptaktor (14) den Lenksollwert empfängt, wobei der Hauptaktor (14) einen internen Sensor (44) beinhaltet, der dazu konfiguriert ist, ein internes Messsignal, das einer Messung des durch den Hauptaktor (14) verliehenen Lenkwinkels entspricht, an die Hauptsteuerung (12) zu übertragen;
- einen externen Sensor (16), der dazu konfiguriert ist, ein externes Messignal, das einer Messung des Lenkwinkels des gelenkten Rades (6) entspricht, an die Hauptsteuerung (12) zu übertragen;
- einen Hilfsaktor (21), der dazu konfiguriert ist, dem gelenkten Rad (6) des Fahrzeugs einen Lenkwinkel zu verleihen, wenn der Hilfsaktor (21) den Lenksollwert empfängt; **dadurch gekennzeichnet, dass**:
die Hauptsteuerung (12) dazu konfiguriert ist, einen ersten Wert zu bestimmen, der der Differenz zwischen dem Lenksollwert und dem internen Messsignal entspricht, und dazu konfiguriert ist, einen zweiten Wert zu bestimmen, der der Differenz zwischen dem internen Messsignal und dem externen Messsignal entspricht,
die Hauptsteuerung (12) dazu konfiguriert ist, den Lenksollwert an den Hilfsaktor (21) zu übertragen, wenn der erste Wert größer als eine erste Fehlerschwelle (SE1) ist und/oder wenn der zweite Wert größer als eine zweite Fehlerschwelle (SE2) ist,
die Hauptsteuerung (12) dazu konfiguriert ist, den Lenksollwert an den Hilfsaktor (21) zu übertragen, wenn das interne Messsignal und/oder das externe Messignal einer Messung des Lenkwinkels entspricht, die größer als eine maximale Lenkschwelle (SBmax) ist, wobei die maximale Lenkschwelle (SBmax) von der momentanen Geschwindigkeit des Fahrzeugs abhängt.

2. Steuergerät (4) nach Anspruch 1, ferner beinhaltend eine Hilfssteuerung (20), die dazu konfiguriert ist, einen Lenkhilfssollwert zu bestimmen, wenn der durch die Hauptsteuerung (12) bestimmte Lenksollwert größer als eine Sollwertschwelle (SVmax) ist, wobei die Sollwertschwelle (SVmax) von der momentanen Geschwindigkeit des Fahrzeugs abhängt,
wobei der Hauptaktor (14) oder der Hilfsaktor (21) dazu konfiguriert ist, dem gelenkten Rad (6) des Fahrzeugs einen Lenkwinkel in Abhängigkeit von dem Lenkhilfssollwert anstelle von dem Lenksollwert zu verleihen.

3. Steuergerät (4) nach Anspruch 2, wobei die Sollwertschwelle (SVmax) für jede momentane Geschwindigkeit des Fahrzeugs kleiner als oder gleich der maximalen Lenkschwelle (SBmax) für diese momentane Geschwindigkeit ist.

4. Steuergerät (4) nach Anspruch 2 oder Anspruch 3, wobei die Hauptsteuerung (12) dazu konfiguriert ist, an eine Stromversorgungsquelle angeschlossen zu sein, die sich von einer Stromversorgungsquelle der Hilfssteuerung (20) unterscheidet, um gemeinsame Störungsmodi zu vermeiden.

5. Steuergerät (4) nach einem der Ansprüche 2 bis 4, ferner beinhaltend einen Stromsensor (26), der dazu konfiguriert ist, eine Stromversorgung des Hilfsaktors (21) zu detektieren und ein Detektionssignal an die Hauptsteuerung (12) zu übertragen.

6. Steuergerät (4) nach einem der vorhergehenden Ansprüche, ferner beinhaltend ein Hauptsystem zur automatischen Ansteuerung (10), das dazu konfiguriert ist, einen Lenkbefehl in Abhängigkeit von einer dem Fahrzeug zugeordneten Trajektorie zu erzeugen und den Lenkbefehl an die Hauptsteuerung (12) bzw. an die Hilfssteuerung (20) zu übertragen, wobei die Hauptsteuerung (12) bzw. die Hilfssteuerung (20) den Lenksollwert anhand des Lenkbefehls bestimmt.

7. Steuergerät (4) nach Anspruch 6, ferner beinhaltend ein Hilfssystem zur automatischen Ansteuerung (18), das dazu konfiguriert ist, einen Hilfslenkbefehl zu bestimmen und den Hilfslenkbefehl an die Hauptsteuerung (12) bzw. an die Hilfssteuerung (20) zu übertragen, wobei die Hauptsteuerung (12) bzw. die Hilfssteuerung (20) den Lenksollwert anhand des Hilfslenkbefehls bestimmt.

8. Steuergerät (4) nach Anspruch 7, wobei die Hauptsteuerung (12) dazu in der Lage ist, den Hilfslenkbefehl anstelle des Lenkbefehls zu berücksichtigen, wenn der Lenkbefehl größer als eine Schwelle für die automatische Ansteuerung (SP) ist, wobei die Schwelle für die automatische Ansteuerung (SP) von der momentanen Geschwindigkeit des Fahrzeugs abhängt.

9. Steuergerät (4) nach Anspruch 8 in Kombination mit Anspruch 3, wobei die Schwelle für die automatische Ansteuerung (SP) für jede momentane Geschwindigkeit des Fahrzeugs kleiner als oder gleich der maximalen Lenkschwelle (SBmax) und/oder der Sollwertschwelle (SVmax) für diese Geschwindigkeit ist.

10. Steuergerät (4) nach einem der vorhergehenden Ansprüche, ferner beinhaltend mindestens eine manuelle Ansteuerungsvorrichtung (24), die dazu konfiguriert ist, einen manuellen Lenkbefehl zu erzeugen, wobei die Hauptsteuerung (12) dazu konfiguriert ist, den Lenksollwert in Abhängigkeit von dem manuellen Lenkbefehl zu bestimmen.

11. Autonomes Kraftfahrzeug (1), das mindestens ein gelenktes Rad (6) beinhaltet, **dadurch gekennzeichnet, dass** es ein Steuergerät (4) umfasst, das mit dem gelenkten Rad (6) verbunden ist, wobei das Steuergerät (4) einem der vorhergehenden Ansprüche entspricht.

## Claims

1. Control device (4) capable of controlling an angle of locking of an autonomous motor vehicle (1), the vehicle having at least one steered wheel (6), the control device (4) comprising:
- a primary controller (12), which is configured to determine a locking setpoint;
- a primary actuator (14), which is configured to impart an angle of locking to the steered wheel (6) of the vehicle (1) on the basis of the locking setpoint when said primary actuator (14) receives said locking setpoint, the primary actuator (14) comprising an internal sensor (44) configured to transmit, to the primary controller (12), an internal measurement signal corresponding to a measurement of the angle of locking imparted by the primary actuator (14);
- an external sensor (16) configured to transmit, to the primary controller (12), an external measurement signal corresponding to a measurement of the angle of locking of the steered wheel (6);
- an auxiliary actuator (21), which is configured to impart an angle of locking to the steered wheel (6) of the vehicle when said auxiliary actuator (21) receives said locking setpoint; **characterized in that**:
the primary controller (12) is configured to determine a first value corresponding to the difference between the locking setpoint and the internal measurement signal, and is configured to determine a second value corresponding to the difference between the internal measurement signal and the external measurement signal,
the primary controller (12) is configured to transmit the locking setpoint to the auxiliary actuator (21) when the first value is greater than a first error threshold (SE1) and/or when the second value is greater than a second error threshold (SE2),
the primary controller (12) is configured to transmit the locking setpoint to the auxiliary actuator (21) when the internal measurement signal and/or the external measurement signal corresponds to a measurement of the angle of locking that is greater than a maximum locking threshold (SBmax), the maximum locking threshold (SBmax) depending on the instantaneous speed of the vehicle.

2. Control device (4) according to Claim 1, further comprising an auxiliary controller (20), which is configured to determine an auxiliary locking setpoint when the locking setpoint determined by the primary controller (12) is greater than a setpoint threshold (SVmax), the setpoint threshold (SVmax) depending on the instantaneous speed of the vehicle,
the primary actuator (14) or the auxiliary actuator (21) being configured to impart an angle of locking to the steered wheel (6) of the vehicle on the basis of the auxiliary locking setpoint instead of the locking setpoint.

3. Control device (4) according to Claim 2, wherein the setpoint threshold (SVmax) is, for each instantaneous speed of the vehicle, less than or equal to the maximum locking threshold (SBmax) for this instantaneous speed.

4. Control device (4) according to Claim 2 or Claim 3, wherein the primary controller (12) is configured to be connected to an electrical power source that is distinct from an electrical power source of the auxiliary controller (20) in order to avoid common modes of failure.

5. Control device (4) according to any one of Claims 2 to 4, further comprising a current sensor (26), which is configured to detect an electrical power supply to the auxiliary actuator (21) and to transmit a detection signal to the primary controller (12).

6. Control device (4) according to any one of the preceding claims, further comprising a primary automatic steering system (10) configured to generate a locking command on the basis of a trajectory assigned to the vehicle, and to transmit the locking command to the primary controller (12) or to the auxiliary controller (20), respectively, the primary controller (12) or the auxiliary controller (20), respectively, determining the locking setpoint from the locking command.

7. Control device (4) according to Claim 6, further comprising an auxiliary automatic steering system (18), which is configured to determine an auxiliary locking command and to transmit the auxiliary locking command to the primary controller (12) or to the auxiliary controller (20), respectively, the primary controller (12) or the auxiliary controller (20), respectively, determining the locking setpoint from the auxiliary locking command.

8. Control device (4) according to Claim 7, wherein the primary controller (12) is able to take into account the auxiliary locking command instead of the locking command, when the locking command is greater than an automatic steering threshold (SP), the automatic steering threshold (SP) depending on the instantaneous speed of the vehicle.

9. Control device (4) according to Claim 8 in combination with Claim 3, wherein the automatic steering threshold (SP) is, for each instantaneous speed of the vehicle, less than or equal to the maximum locking threshold (SBmax) and/or the setpoint threshold (SVmax) for this speed.

10. Control device (4) according to any one of the preceding claims, further comprising at least one manual steering device (24) configured to generate a manual locking command, the primary controller (12) being configured to determine the locking setpoint on the basis of the manual locking command.

11. Autonomous motor vehicle (1) comprising at least one steered wheel (6), **characterized in that** said vehicle has a control device (4) connected to the steered wheel (6), the control device (4) being in accordance with any one of the preceding claims.
